Europäisches Patentamt

**European Patent Office**

Office européen des brevets

(11) Veröffentlichungsnummer: **0 240 709**
**B1**

(12) **EUROPÄISCHE PATENTSCHRIFT**

(45) Veröffentlichungstag der Patentschrift:
26.09.90

(51) Int. Cl.⁵: **B23Q 3/155**, B25H 3/00,
B65G 1/04

(21) Anmeldenummer: **87102961.7**

(22) Anmeldetag: **03.03.87**

(54) **Speichervorrichtung für eine Werkzeugmaschine.**

(30) Priorität: **12.03.86 CH 1007/86**

(43) Veröffentlichungstag der Anmeldung:
**14.10.87 Patentblatt 87/42**

(45) Bekanntmachung des Hinweises auf die Patenterteilung:
**26.09.90 Patentblatt 90/39**

(84) Benannte Vertragsstaaten:
**AT DE ES FR GB IT NL SE**

(56) Entgegenhaltungen:
**DE-A- 2 135 240**
**DE-A- 2 140 214**
**DE-A- 3 138 802**
**DE-A- 3 410 276**
**DE-U- 8 520 123**
**US-A- 3 355 799**

(73) Patentinhaber: **Starrfräsmaschinen AG,
Seebleichestrasse 61, CH-9400 Rorschacherberg(CH)**

(72) Erfinder: **Hillen, Gerhard, Wiesentalstrasse 10a,,
CH-Rorschacherberg(CH)**

(74) Vertreter: **EGLI-EUROPEAN PATENT ATTORNEYS,
Horneggstrasse 4, CH-8008 Zürich(CH)**

ACTORUM AG

# Beschreibung

Die Erfindung betrifft eine Speichervorrichtung für eine Werkzeugmaschine nach dem Oberbegriff des Patentanspruchs 1.

Zur Automatisierung der Bearbeitung von Werkstücken ist es erforderlich, dass bei Werkzeugmaschinen neben anderen Bedingungen ein selbsttätiger Werkzeugwechsel möglich sein muss. Zu diesem Zweck wird den Werkzeugmaschinen jeweils ein maschineneigenes Werkzeugmagazin zur Lagerung und Bereitstellung der Werkzeuge zugeordnet. Mittels einer durch eine Steuerung betätigten Handhabungseinrichtung werden die Werkzeugeinheiten dem Werkzeugmagazin entnommen und der Werkzeugmaschine übergeben. Gleichzeitig werden nicht mehr benötigte Werkzeuge von der Werkzeugmaschine entfernt und wieder dem Werkzeugmagazin übergeben.

Vorrichtungen dieser Art sind in verschiedenen Ausführungen bekannt. In der einfachsten Ausführung besteht das Werkzeugmagazin aus einem Gestell, in welchem die Werkzeugeinheiten in einer bestimmten Reihenfolge gelagert sind. Bei einer weiteren bekannten Vorrichtung besteht das Werkzeugmagazin aus einem scheibenförmigen Teller, an dessen Umfang die einzelnen Werkzeuge oder Werkzeugeinheiten gelagert sind. Nachteilig ist jedoch, dass für die Aufbewahrung von verhältnismässig wenig Werkzeugen viel Platz beansprucht wird. Beiden vorstehend genannten Vorrichtungen ist der Nachteil gemeinsam, dass die gelagerten Werkzeuge offen der Verschmutzung ausgesetzt sind. Diesen Nachteil weisen auch sogenannte Flächenspeicher auf, bei denen die Werkzeuge bzw. Werkzeugeinheiten auf einer ebenen, meistens senkrechten Fläche angeordnet sind und von der Handhabungseinrichtung, meistens einem Portallader, entnommen und zurückgegeben werden.

Aus DE-A 3 410 276 ist eine Drehmaschine mit einer Speichervorrichtung gemäß dem Oberbegriff des Anspruchs 1 bekannt, auf deren Maschinenbett eine Werkzeugaufnahme und ein Reitstock verschiebbar gelagert sind. Seitlich des Maschinenbettes ist ein Bearbeitungsturm bis zu Magazinen verschiebbar angeordnet, auf welchen Werkzeuge bzw. Werkzeugeinheiten parallel nebeneinander gelagert sind und an eine Aufnahmevorrichtung im Bearbeitungsturm übergeben werden können. Auch bei dieser Anordnung der Magazine sind die darin gelagerten Werkzeuge der Verschmutzung ausgesetzt.

Der Erfindung liegt die Aufgabe zugrunde, eine Speichervorrichtung der eingangs beschriebenen Art so auszugestalten, dass die Werkzeuge bzw. Werkzeugeinheiten raumsparend aufbewahrt werden können, wobei die im Werkzeugmagazin gelagerten Werkzeuge kontrollierbar und austauschbar sind, ohne dass eine Beeinträchtigung des Betriebes der Werkzeugmaschine eintreten würde.

Diese Aufgabe wird gemäss der Erfindung durch die kennzeichnenden Merkmale des Patentanspruches 1 gelöst.

In der Zeichnung ist ein Ausführungsbeispiel der Erfindung dargestellt. Dieses wird nachfolgend beschrieben, wobei

Fig. 1 eine Frontansicht einer Speichervorrichtung für eine Werkzeugmaschine mit einem Werkzeugmagazin,

Fig. 2 einen schematisch dargestellten Querschnitt des Werkzeugmagazins längs der Linie II–II in Fig. 1 in vergrössertem Massstab,

Fig. 3 eine schematisch dargestellte Draufsicht des Werkzeugmagazins aus Richtung III in Fig. 2 und

Fig. 4 eine schematische Darstellung der Anordnung einer Werkzeugmaschine mit zwei Speichervorrichtungen.

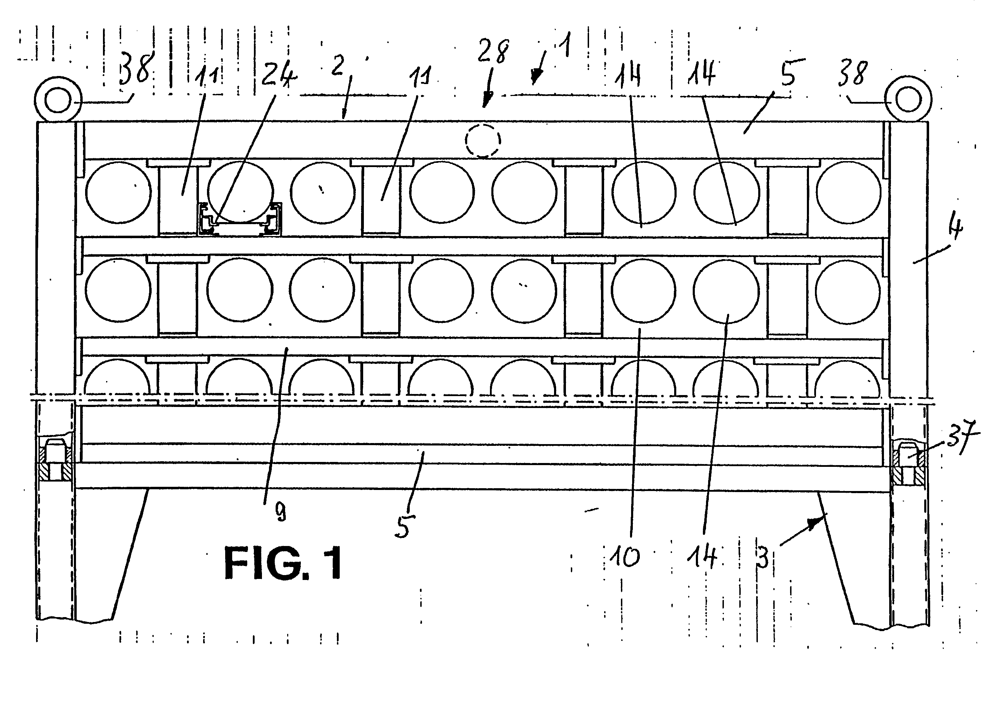

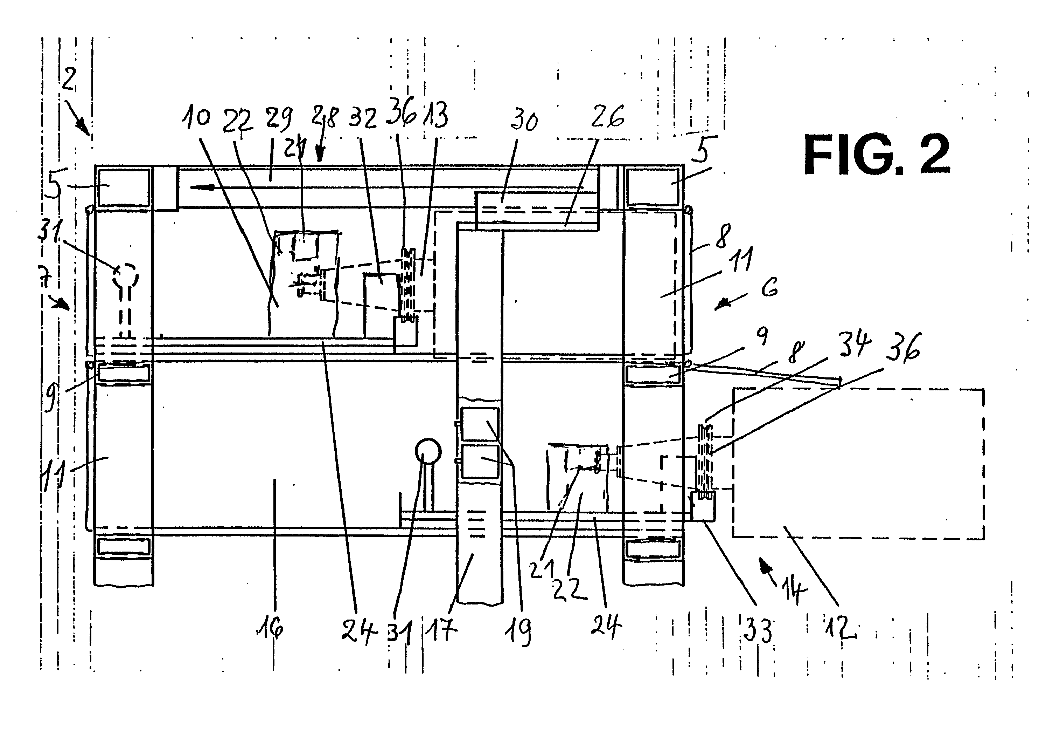

Die in Fig. 1 dargestellte Speichervorrichtung 1 weist ein Werkzeugmagazin 2 auf, welches auf einem Untergestell 3 abgestützt ist. Das Werkzeugmagazin 2 ist eine aus Streben 4 und Querträgern 5 zusammengebaute Fachwerk-Konstruktion, bei welcher die Decke, der Boden und die Seitenwände als geschlossene Wände ausgebildet sind. Die Vorderseite 6 und die Rückseite 7 des Werkzeugmagazins 2 (Fig. 2) sind durch bewegliche Klappen 8 ebenfalls abschliessbar, können jedoch nach Bedarf geöffnet werden. Im Werkzeugmagazin 2 sind an der Vorder-und Rückseite 6, 7 mehrere Traversen 9 eingebaut, welche den Innenraum in Fächer 10 unterteilen. Die Traversen 9 sind zudem durch mehrere Stützen 11 gegeneinander abgestrebt.

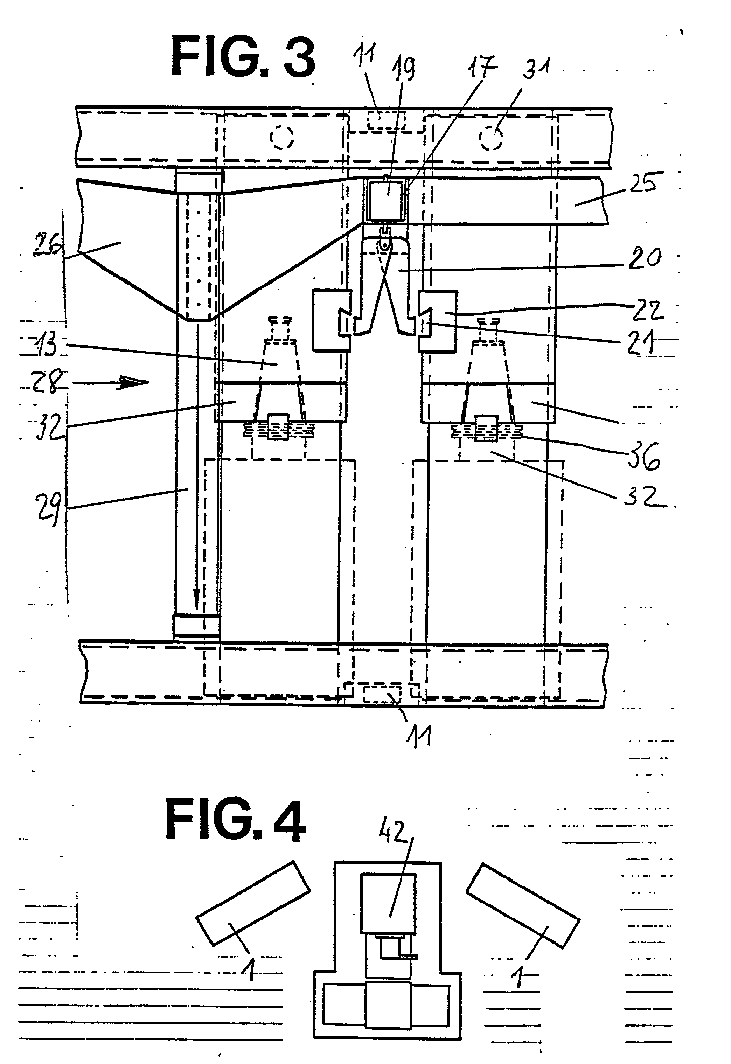

In jedem Fach 10 sind in einer Reihe eine AnzahL aus einem Werkzeug 12 und einem Werkzeughalter 13 zusammengesetzte Werkzeugeinheiten 14 gelagert, deren Längsachse senkrecht zur Längsausdehnung des Werkzeugmagazins 1 verläuft. In Fig. 1 sind die Werkzeugeinheiten 14 nur schematisch dargestellt, während sie in ihrer Ausdehnung aus Fig. 2 und 3 ersichtlich sind. Das Werkzeug 12 ist beispielsweise ein Zylinderfräser und der Werkzeughalter 13 mit einem Konus versehen, welcher in der Spindel der Werkzeugmaschine befestigt werden kann.

In Fig. 1 sind drei Fächer 10 dargestellt, jedoch kann das Werkzeugmagazin 2 eine beliebige Anzahl Fächer 10, z.B. acht Fächer, aufweisen, was zusammen mit acht pro Fach gelagerten Werkzeugeinheiten 14 Platz für die Lagerung und Bereitstellung von 64 Werkzeugeinheiten 14 bietet. Selbstverständlich kann auch die Zahl der Werkzeugeinheiten 14 pro Fach eine andere Zahl als acht Einheiten aufweisen. In jedem Fall sind pro Fach Stützen 11 entsprechend der Hälfte der Werkzeugeinheiten 14 in der in Fig. 1 dargestellten Weise vorzusehen, d.h. zwischen zwei Werkzeugeinheiten 14 liegt eine Stütze 11 mit Ausnahme an den beiden Enden des Faches 10, wo zwischen der äussersten Stütze 11 und den Seitenwänden eine einzige Werkzeugeinheit 14 untergebracht ist.

In dem zwischen den Stützen 11 gebildeten Freiraum 16 sind senkrechte Arme 17 verschiebbar angeordnet. Die Arme 17 sind beispielsweise als U-förmiges Profil (Fig. 3) ausgebildet, in welchem pro Fach 10 zwei Hubeinheiten 19, beispielsweise elektrisch betätigte Hubmagnete, befestigt sind. Die beiden Hubeinheiten 19 dienen der Kupplung und Entkupplung des Armes 17 mit den beiden benachbarten Werkzeugeinheiten 14. Die Hubeinheiten 19 betätigen schwenkbare Kupplungshaken 20, welche zum Kuppeln der Werkzeugeinheit 14 in eine Nut 21 einer an einer Auszugvorrichtung angeordneten Kupplungsraste 22 eingerastet werden, auf welcher je eine Werkzeugeinheit 14 gelagert und die vor die Vorderseite 6 des Werkzeugmagazins 2 und zurück verschiebbar ist.

Die Arme 17 - es sind im ganzen halb soviele Arme 17 wie Werkzeugeinheiten 14 in einem Fach 10 - sind auf einer sich über die Länge des Werkzeugmagazins 2 erstreckenden Quertraverse 25 befestigt (Fig. 3). Die Quertraverse 25 weist in der Mitte eine plattenförmige Verbreiterung 26 auf, mittels welcher die Quertraverse 25 mit den Armen 17 an einer Verschiebevorrichtung 28 befestigt ist. Die Verschiebevorrichtung ist beispielsweise (Fig. 2 und 3) ein positionierbarer Pneumatikantrieb, z.B. von Martonair, der aus einem Zylinder 29 und einem an der Aussenseite des Zylinders 29 angeordneten, mit dem im Zylinder 29 befindlichen Kolben verbundenen Halter 30 besteht. Am Halter 30 ist die Quertraverse 25 mit ihrer plattenförmigen Verbreiterung 26 fest verbunden. In Fig. 3 sind nur zwei übereinanderliegende Fächer 10 dargestellt. Selbstverständlich weisen die Arme 17 eine solche Länge auf, dass sie die Auszugvorrichtungen 24 in allen Fächern 10 verschieben können.

Aus Fig. 1 und 2 sind die Auszugvorrichtungen 24 erkennbar. Bei diesen handelt es sich um Vorrichtungen, wie sie beispielsweise bei ausziehbaren Schubladen von Akten- und Werkzeug-Schränken allgemein bekannt sind (z.B. Rollon Doppelhub-Auszugvorrichtungen) und deshalb nicht im Detail beschrieben werden. Solche Auszugvorrichtungen 24 ermöglichen die Verschiebung der Werkzeugeinheit 14 vor die Vorderseite 6 des Werkzeugmagazins 2 in die Uebergabestellung mittels der Verschiebevorrichtung 28 oder vor die Rückseite 7 des Werkzeugmagazins 2 manuell mittels eines auf der Auszugvorrichtung 24 befestigten Handgriffes 31 zur Kontrolle und zum Auswechseln der Werkzeugeinheit 14. Diese Operationen können vorgenommen werden, ohne dass der Betrieb der Werkzeugmaschine unterbrochen werden müsste.

Die Werkzeugeinheit 14 ist mittels eines Halteringes 32 auf der Auszugvorrichtung 24 gehalten, bei welchem scheitelseitig ein Ringsegment zur Bildung eines Schlitzes entfernt ist und welcher innenseitig einen dem Konus des Werkzeughalters 13 entsprechenden Innenkonus aufweist. Dadurch wird eine zuverlässige und exakte Positionierung der Werkzeugeinheit 14 gewährleistet. Zusätzlich ist die Werkzeugeinheit 14 durch einen am Haltering 32 befestigten elastischen Nocken 33 gehalten, welcher in eine Mitnahmenut 34 eines Greifringes 36 ragt, mittels welcher die Handhabungsvorrichtung der Werkzeugmaschine die Werkzeugeinheit 14 ergreift. Dadurch, dass der Haltering 32 scheitelseitig einen Schlitz aufweist, kann die Werkzeugeinheit 14 schon bei geringer Längsverschiebung aus dem Haltering 32 angehoben werden. Der vom elastischen Nocken 33 ausgeübte Widerstand muss von der Handhabungseinrichtung überwunden werden.

Das Werkzeugmagazin 2 ist auf dem Untergestell 3 durch Positioniernocken 37 positioniert. Das Werkzeugmagazin 2 kann an deckenseitig angeordneten Oesen 38 aufgehängt und transportiert werden. Auf diese Weise können verschiedene Werkzeugmagazine mit verschiedenen Werkzeugsätzen an der Werkzeugmaschine eingesetzt werden.

Das Untergestell 3 ist in ähnlicher Weise wie das Werkzeugmagazin 2 aus Streben 39 und Querträgern 40 zusammengesetzt, wobei noch zusätzlich Verstärkungsstege 41 vorgesehen sind. Selbstverständlich kann das Werkzeugmagazin 1 und das Untergestell 3 in beliebiger Weise ausgeführt sein. Die Teile können zusammengeschweisst, zusammengeschraubt oder aus vorfabrizierten Teilen zusammengesetzt sein. Es ist lediglich der entsprechende Platz für die Unterbringung der Verschiebevorrichtung 28 und der Arme 17 mit der Quertraverse 25 vorzusehen.

In Fig. 2 und 3 ist die Verschiebevorrichtung 28 auf der Deckenseite des Werkzeugmagazins 2 angebracht. Es ist jedoch auch möglich, die Verschiebevorrichtung bodenseitig anzuordnen, wobei dann die Arme 17 senkrecht aufwärtsgerichtet sind.

In Fig. 4 ist schematisch eine Werkzeugmaschine 42 dargestellt, welcher zwei der beschriebenen Speichervorrichtungen 1 zugeordnet sind. Auf diese Weise können genügend Werkzeuge bzw. Werkzeugeinheiten 14 zur Bearbeitung auch grosser Programme bereitgestellt werden. Das Werkzeugmagazin 2 zeichnet sich zudem dadurch aus, dass
- es wenig Platz benötigt, da die Werkzeuge bzw. Werkzeugeinheiten zur Uebergabe an die Handhabungseinrichtung ausgefahren werden und somit kein zusätzlicher Platz benötigt wird,
- ohne Beeinträchtigung des Betriebes Werkzeuge austauschbar und kontrollierbar sind,
- die Werkzeugeinheiten im geschlossenen Innern des Werkzeugmagazins verbleiben, welches nur zum Ausfahren derselben geöffnet wird und
- es austauschbar ist.

Die Bedienung des beschriebenen Werkzeugmagazins erfolgt mittels einer, einen Prozessor aufweisenden elektronischen Steuerung, mit welcher sämtliche Bewegungen des Kuppelns der Werkzeugmagazine und deren Verschiebung durch die Verschiebevorrichtung selbsttätig gesteuert werden.

**Patentansprüche**

1. Speichervorrichtung (1) für eine Werkzeugmaschine (42) mit einem quaderförmigen Werkzeugmagazin (2) zum Speichern und zur Bereitstellung von aus einem Werkzeug (12) und einem Werkzeughalter (13) bestehenden, parallel zueinander angeordneten Werkzeugeinheiten (14), welche auf quer zur Längsausdehnung verschiebbaren Auszugsvorrichtungen (24) gelagert und mittels Haltemitteln (32, 33) gehalten sind, wobei durch eine gesteuerte Verschiebevorrichtung (28) eine vorbestimmte Werkzeugeinheit (14) auswählbar sowie auf der Auszugsvorrichtung (24) aus dem Werkzeugmagazin ausfahrbar und damit zur Übergabe an die Werkzeugmaschine (42) bereitstellbar ist, dadurch gekennzeichnet, dass die die Werkzeugeinheiten (14) haltenden Auszugsvorrichtungen (24) in senkrechten Kolonnen angeordnet sind und zwischen jeweils zwei derselben Freiräume (16) freigelassen sind, in welchen je ein senkrecht stehender Arm (17) angeordnet ist, wobei alle Arme (17) an einem Ende durch eine in Auszugsrichtung der Auszugsvorrichtungen (24) verfahrbarer Quertraverse (25) miteinander verbunden sind und Kupplungsmittel (19, 20) tragen, mit welchen die beiden beidseits der Arme (17) benachbarten Auszugsvorrichtungen (24) an einer Kupplungsraste (22) kuppelbar sind.

2. Einrichtung nach Anspruch 1, dadurch gekennzeichnet, dass das Werkzeugmagazin (2) an der Decke, an dem Boden und an beiden Seiten geschlossene Wände aufweist sowie auf der Vorderseite (6) und auf der Rückseite (7) durch staubdichte Klappen (8) verschlossen ist, welche den einzelnen Werkzeugeinheiten (14) zugeordnet sind, wobei die Vorderseite nur beim Aus- und Einfahren und die Rückseite zur Kontrolle und Auswechseln der Werkzeugeinheit zu öffnen bestimmt ist.

3. Einrichtung nach Anspruch 1, dadurch gekennzeichnet, dass die Quertraverse (25) mit ihren Armen (17) durch einen Schubkolbenantrieb, z.B. einen Pneumatikzylinder (29), verschiebbar ist, der am Werkzeugmagazin (2) boden- oder deckenseitig angeordnet und selbsttätig steuerbar ist, z.B. durch einen Prozessor.

4. Einrichtung nach Anspruch 1, dadurch gekennzeichnet, dass die Kupplungsmittel schwenkbare Kupplungshaken (29) sind, welche in eine an einer Kupplungsraste (22) vorgesehene Nut (21) einrastbar sind.

5. Einrichtung nach Anspruch 1, dadurch gekennzeichnet, dass die Werkzeugeinheiten (14) auf ihren Auszugvorrichtungen (24) mittels einer Halterung (32, 33) befestigt sind, durch welche die Werkzeugeinheit positioniert und formschlüssig gehalten ist.

6. Einrichtung nach Anspruch 5, dadurch gekennzeichnet, dass die Halterung ein auf der Auszugvorrichtung (24) abgestützter, scheitelseitig aufgeschnittener Haltering (32) und ein elastischer Nocken (33) ist, welch letzterer formschlüssig in eine Mitnahmenut (34) eines Greifringes (36) für eine Handhabungseinrichtung eingreift.

7. Einrichtung nach Anspruch 1, dadurch gekennzeichnet, dass das Werkzeugmagazin (2) auf einem Fussgestell (3) abgestützt ist, von dem es an Ösen (38) abhebbar, an einen andern Ort transportierbar und/oder durch ein anderes Werkzeugmagazin ersetzbar ist.

8. Einrichtung nach Anspruch 1, dadurch gekennzeichnet, dass die Auszugvorrichtung (24) als Doppelhub-Auszüge ausgebildet sind.

**Revendications**

1. Dispositif de stockage (1) pour une machine-outil (42), comportant un magasin d'outillage (2) ayant la forme d'un parallélépipède rectangle pour le stockage et la mise à disposition d'unités d'outillage (14), disposées parallèlement les unes par rapport aux autres et constituées d'un outil (12) et d'un porte-outil (13), qui sont stockées sur des dispositifs d'extraction (24) pouvant se déplacer perpendiculairement à la direction longitudinale, et qui sont maintenues grâce á des moyens de maintien (32, 33), étant entendu qu'une unité d'outillage (14) prédéterminée peut être choisie au moyen d'un dispositif de translation (28) commandé et peut être extraite du magasin d'outillage sur le dispositif d'extraction (24) et, ainsi, peut être mise à disposition pour transfert à la machine-outil (42), caractérisé en ce que les dispositifs d'extraction (24) maintenant les unités d'outillage (14) sont disposés suivant des colonnes verticales et sont chaque fois libérés entre deux de ses volumes libres (16), dispositifs d'extraction dans chacun desquels un bras (17) est disposé verticalement, étant entendu que tous les bras (17) sont liés entre eux, á l'une de leurs extrémités, par une traverse (25) pouvant se déplacer dans la direction d'extraction des dispositifs d'extraction (24), et que ces bras portent des moyens d'accouplement (19, 20), avec lesquels on peut accoupler les deux dispositifs d'extraction (24) voisins des bras (17) et situés des deux côtés à un taquet d'accouplement (22).

2. Dispositif suivant la revendication 1, caractérisé en ce que le magasin d'outillage (2) présente, sur son toit, son sol et ses parois latérales, des cloisons fermées, et en ce qu'il est fermé sur sa face avant (6) et sa face arrière (7) au moyen de volets (8), étanches à la poussière, qui sont associés aux différentes unités d'outillage (14), étant entendu que la face avant est destinée à être ouverte seulement pour faire sortir et entrer les unités d'outillage et que la face arrière est destinée à être ouverte seulement pour le contrôle et le remplacement des unités d'outillage.

3. Dispositif suivant la revendication 1, caractérisé en ce que la traverse (25), avec ses bras (17), peut être déplacée au moyen d'un dispositif d'entraînement par piston, par exemple par un vérin pneumatique (29), qui est disposé sur le magasin d'outillage (2), côté sol ou côté toit, et qui peut être commandé automatiquement, par exemple par un processeur.

4. Dispositif suivant la revendication 1, caractérisé en ce que les moyens d'accouplement sont des griffes d'accouplement (20) qui peuvent s'enclencher dans une rainure (21) prévue sur un taquet d'accouplement (22).

5. Dispositif suivant la revendication 1, caractérisé en ce que les unités d'outillage (14) sont fixées sur leur dispositifs d'extraction (24) à l'aide d'un moyen de maintien (32, 33), par lequel l'unité d'outillage est positionnée et maintenue á engagement positif.

6. Dispositif suivant la revendication 5, caractérisé en ce que le moyen de maintien est une bague de maintien (32), échancrée sur son sommet et prenant appui sur le dispositif d'extraction (24), et une came élastique (33), cette dernière s'enclenchant à engagement positif dans une rainure d'entraînement (34) d'une bague de prise (36) pour une installation de manipulation.

7. Dispositif suivant la revendication 1, caractérisé en ce que le magasin d'outillage (2) prend appui sur un soubassement (3) d'où il est possible de le soulever par des anneaux (38), de le transporter à un autre endroit et/ou de le remplacer par un autre magasin d'outillage.

8. Dispositif suivant la revendication 1, caractérisé en ce que le dispositif d'extraction (24) est réalisé sous la forme d'un extracteur à double effet.

**Claims**

1. Storage apparatus (1) for a machine tool (42) with a rectangular shaped tool magazine (2) for storing and having ready tool units (14) arranged parallel to one another and consisting of a tool (12) and a tool holder (13), which are mounted on pullout units (24) displaceable transversely to the longitudinal extent and held by means of mounting units (32, 33), wherein, by means of a controlled displacement device (28), a predetermined tool unit (14) can be chosen as well as brought out from the tool magazine on the pullout unit (24) and thereby can be made ready for transfer to the machine tool (42), characterised in that the pullout units (24) with the mounted tool units (14) are arranged in vertical columns and between each two of the same, free spaces (16) are left free in which is arranged in each case a vertically extending arm (17), wherein all arms (17) are connected at one end by means of a transverse member (25) which can be moved in the pullout direction of the pullout units (24) and carry coupling units (19, 20) with which both of the pullout units (24) adjacent both sides of the arms (17) can be coupled to a coupling pawl (22).

2. Device according to Claim 1, characterised in that the tool magazine (2) has closed walls on the roof, on the floor and at both sides as well as being closed on the front side (6) and on the rear side (7) by dust-tight flaps (8) relative to which the individual tool units (14) are arranged wherein the front side is designed to be opened only for feeding in and out and the rear side for checking and exchanging of tool units.

3. Device according to Claim 1, characterised in that the transverse member (25) with its arms (17) is displaceable by means of a piston cylinder drive, e.g. a pneumatic cylinder (29) which is arranged on the floor or roof of the tool magazine (2) and is automatically controllable, e.g. by means of a processor.

4. Device according to Claim 1, characterised in that the coupling means are pivoted coupling hooks (29) which can be engaged in a groove (21) provided on a coupling pawl (22).

5. Device according to Claim 1, characterised in that the tool units (14) are fixed on their pullout units (24) by means of a mounting (32, 33) by means of which the tool unit is positioned and positively held.

6. Device according to Claim 5, characterised in that the mounting is a mounting ring (32) supported on the pullout unit (24) and with a cutout at its top and an elastic seating (33), which latter engages fittingly in an entrainer groove (34) of a gripper ring (36) for a handling unit.

7. Device according to Claim 1, characterised in that the tool magazine (2) is supported on a foot framework (3) which can be lifted up by means of eyes (38), transported to another place and/or replaced by another tool magazine.

8. Device according to Claim 1, characterised in that the pullout unit (24) is constructed as a two-stage pullout unit.

**FIG. 1**

FIG. 2

EP 0 240 709 B1

FIG. 3

FIG. 4